# EUROPÄISCHE PATENTSCHRIFT

(11) **EP 1 905 691 B1**
(45) Veröffentlichungstag und Bekanntmachung des Hinweises auf die Patenterteilung: **08.07.2009**
(21) Anmeldenummer: 07013937.3
(22) Anmeldetag: 17.07.2007
(51) Int. Cl.: B64G 1/58, B64G 1/62

(54) **Raumfahrzeug mit einer Vorrichtung zum Hitzeschutz und zum Abbremsen**
Space vehicle with a device for thermal protection and braking
Véhicule spatial avec un dispositif de protection thermique et de freinage

(30) Priorität: 30.09.2006 DE 102006046572
(43) Veröffentlichungstag der Anmeldung: 02.04.2008
(73) Patentinhaber: Astrium GmbH, 85521 Ottobrunn (DE)
(72) Erfinder: Trabandt, Ulrich, 28201 Bremen (DE); Schmid, Manfred, 88090 Immenstaad (DE)
(74) Vertreter: Hansmann, Dierk

(56) Entgegenhaltungen:
- EP-A1- 0 453 361
- US-A- 4 896 847
- US-B1- 6 735 842

## Beschreibung

Die Erfindung betrifft ein Raumfahrzeug mit einer Vorrichtung zum Abbremsen des Raumfahrzeuges, die beim Eintritt in die Atmosphäre entfaltbar ist.

Beim Eintritt von Raumfahrzeugen in die Atmosphäre der Erde oder anderer Planeten bzw. Planetenmonde werden Hitzeschilde und/oder Bremskörper benötigt, um das Fahrzeug zu verzögern und es vor zu großer Erhitzung durch die entstehende Reibungswärme zu schützen. Da die Fahrzeuge, die für zukünftige Missionen geplant sind, vergleichsweise groß und schwer sein werden, können sie mit herkömmlichen Hitzeschutzvorrichtungen, die direkt an der Fahrzeugoberfläche angebracht sind, nicht immer ausreichend geschützt werden. Deshalb werden über die Dimension des Fahrzeuges hinaus große hitzebeständige Bremsschirme und/oder Hitzeschilde benötigt, die jedoch aufgrund ihrer Größe oft nur schwer in einer Startrakete bzw. im Laderaum des Raumfahrzeuges untergebracht werden können.

Aus diesem Grund wurden bereits aufblasbare flexible Strukturen verschiedener Bauart vorgeschlagen, die wegen der beim Eintritt in die Atmosphäre entstehenden hohen Wärmelasten entweder ihrerseits mit einem ablativen Hitzschutz versehen sein müssen oder aber die zu sehr großen Ballonstrukturen aus hitzebeständigem Material aufgeblasen werden müssen. Diese Systeme haben jedoch den Nachteil sehr hohen Volumen- und Energiebedarfs und hoher Massen für die Druckgasbehälter.

Nach der EP-A1-0 453 361 ist eine entfaltbare Vorrichtung für einen Satelliten für diesen Zweck bekannt geworden. Hierzu sind an einen Träger Elemente angeordnet, die über ein gemeinsames Betätigungssystem um feste Achsen bezogen auf den Träger zu schwenken sind, wobei diese Achsen ein konvexes Polygon in einer Ebene bilden. Hierbei werden unterschiedliche Tafeln abwechselnd angeordnet und sind über unterschiedliche Achsen verschwenkbar.

Aufgabe der Erfindung ist es, eine Vorrichtung vorzuschlagen, die als Hitzeschutz und als Bremsschirm für Raumfahrzeuge einsetzbar ist und die eine sehr geringe Masse aufweist und ein Minimum an Platz beansprucht.

Die Erfindung löst diese Aufgabe durch einen entfaltbaren Schild aus ultraleichten hochtemperatur-beständigen faserverstärkten Keramik-Paneelen, die entfaltbar an der Außenstruktur des Raumfahrzeuges gehaltert sind, wobei die Paneele durch Druckstreben abgestützt sind, die an ihren beiden Enden mit Gelenklagern ausgestattet sind und ein Gelenklager die Druckstrebe mit dem zugeordneten Paneel verbindet, während das an dem dem Paneel gegenüberliegenden Ende der Druckstrebe angeordnete Gelenklager auf einem zentralen, das Wiedereintritt-Fahrzeug umgebenden und entlang diesem gleitend verschieblichen Entfaltungsrohr gehaltert ist.

Zwar sind im Bereich des Satellitenbaus bereits Faltstrukturen für große Antennen in terrestrischer und orbitaler Anwendung bekannt, jedoch bestehen diese bekannten Faltstrukturen aus herkömmlichen faserverstärkten Verbundmaterialen und sind nur für geringe Temperaturschwankungen um etwa ± 50°C und für vergleichsweise geringe mechanische Beanspruchungen geeignet.

Die Vorrichtung gemäß der Erfindung weist eine Reihe technischer Vorteile auf. So ermöglicht ihre vergleichsweise geringe Masse eine Gewichtsreduktion um etwa 50 Prozent gegenüber den bekannten Hitzeschutz- und Bremsvorrichtungen für Raumfahrzeuge, insbesondere gegenüber Faltstrukturen mit einem Ablator bzw. gegenüber aufblasbaren Faltkammersystemen mit einem solchen Ablator. Daher können auch kleinere Nutzlastträger eine aus einem gefalteten System bestehende Vorrichtung gemäß der Erfindung aufnehmen. Außerdem kann wegen der mit der erfindungsgemäßen Faltstruktur erzielbaren Gewichtseinsparung mehr Nutzlast im Fahrzeug aufgenommen und folglich kostengünstiger transportiert werden. Schließlich ermöglicht es die erfindungsgemäße Vorrichtung, auch kleine Kapseln einzusetzen, die ansonsten ohne großen Hitzeschild schnell zu heiß würden und die daher zu riskant für Nutzlasten wären. Dabei kann die erfindungsgemäße Vorrichtung zusätzlich zur Abbremswirkung außerdem eine die Flugbahn stabilisierende Funktion übernehmen.

Die Vorrichtung gemäß der Erfindung verbindet dabei sehr verschiedene Funktionen miteinander: Sie ist faltbar, um in die jeweilige Nutzlastverkleidung der Träger-Rakete zu passen, sie gewährleistet ein sicheres Entfalten zu einem sich selbst versteifenden aerodynamischen Bremsschild, der die hohen Verzögerungslasten aufnehmen kann, und sie besteht aus hitzebeständigem Material, das beim Abbremsen in der Atmosphäre nicht verglüht oder degradiert. Ferner besitzt die erfindungsgemäße Vorrichtung eine extrem leichte und steife Ausführung, um die Nutzlast des Raumfahrzeuges so groß wie möglich auslegen zu können. Sie führt bei ihrem Einsatz zu keiner Verunreinigung der Atmosphäre durch ablative Hitzeschutz-Materialen, wie dies bei herkömmlichen Systemen der Fall sein kann.

Die bei der erfindungsgemäßen Vorrichtung vorgesehenen Paneele sind in der bevorzugten Ausführungsform der Erfindung aus kohlenstofffaserverstärkter Keramik (C/SiC) gefertigt, die zum einen leichter als beispielsweise der Leichtbauwerkstoff Aluminium ist, während auf der anderen Seite ihre Festigkeit und ihre Steifigkeit in etwa vergleichbar mit derjenigen von Aluminium ist. Darüber hinaus nimmt die Festigkeit dieses Materials bei Temperaturen bis 1600°C noch um etwa 10% zu.

Der Entfaltungs-und Verriegelungsmechanismus der Vorrichtung gemäß der Erfindung ist derart steif und robust ausgelegt, daß er auch bei einer Verformung der Befestigungsstruktur infolge thermisch verursachter Spannungen im Orbit, z.B. auf der Sonnenseite des Raumfahrzeuges gegenüber der Schattenseite, sicher funktioniert und auch unter den sehr hohen thermischen und mechanischen Lasten während des Eintritts in die Erdatmosphäre bzw. in die Atmosphäre eines anderen Himmelskörpers, bei dem Temperaturen bis zu 1700°C auftreten können, nicht versagt.

Nachfolgend soll die Erfindung anhand von in der Zeichnung dargestellten Ausführungsbeispielen näher erläutert werden.

Es zeigen:
- Fig. 1: die Spitze einer Rakete mit einer Nutzlast und einem gefaltetem Hitzeschild;
- Fig. 2: die Nutzlast gemäß Fig. 1 mit entfaltetem Hitzeschild;
- Fig. 3 bis 5:: eine Nutzlast mit einem nichtrotationssymmetrischen Hitzeschild im gefalteten, halb geöffneten und im vollständig geöffneten Zustand;
- Fig. 6: eine räumliche Darstellung eines Wiedereintritt-Fahrzeuges mit einer Faltstruktur, die zugleich als Stabilisator und als Bremsschirm dient, in gefaltetem Zustand mit ineinander gedrehten Faltpaneelen;

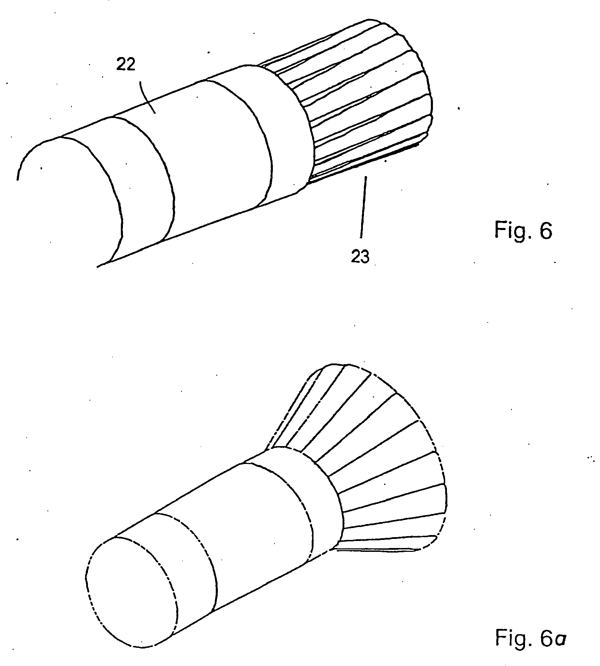

- Fig. 6 a: eine räumliche Darstellung eines Wiedereintritt-Fahrzeuges mit einer Faltstruktur, die zugleich als Stabilisator und als Bremsschirm dient, in entfaltetem Zustand mit sich überlappenden Faltpaneelen;

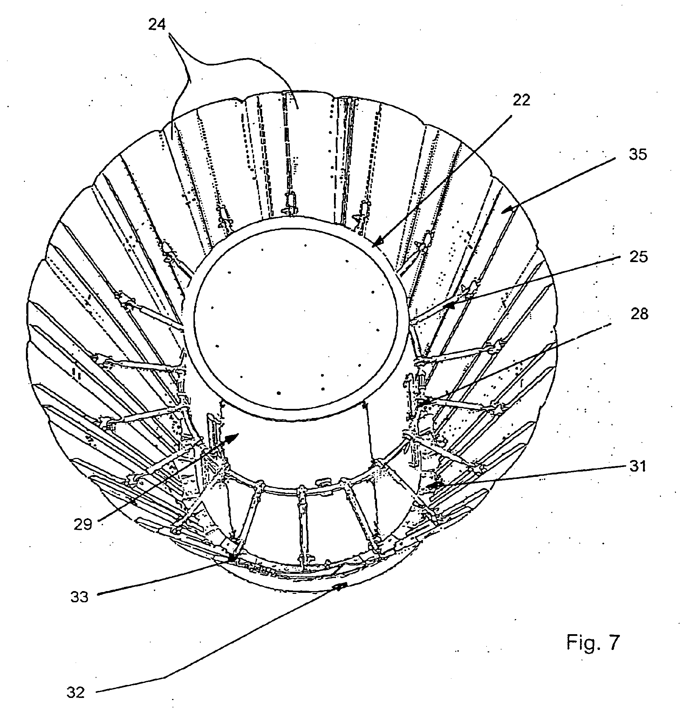

- Fig. 7:: eine räumliche Darstellung eines Teils des Wiedereintritt-Fahrzeuges gemäß Fig. 6, bei dem sich die Faltstruktur in geöffnetem Zustand befindet;

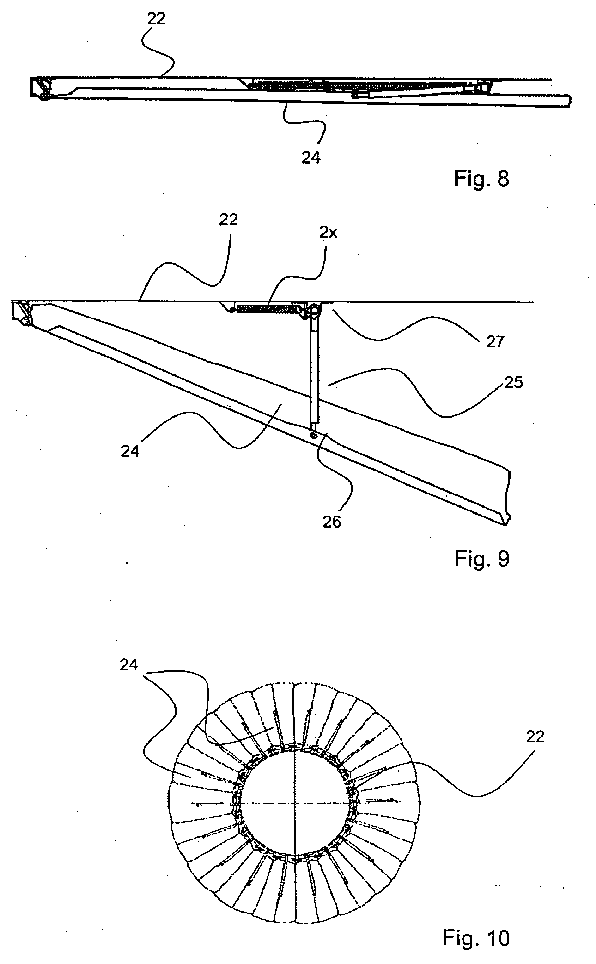

- Fig. 8 u. 9:: in einer Detaildarstellung der Anordnung gemäß Fig. 6 einen Schnitt durch die Faltstruktur in geschlossenem und geöffnetem Zustand;
- Fig. 10: die Struktur gemäß den Figuren 6 und 7 in geöffnetem Zustand in Draufsicht und

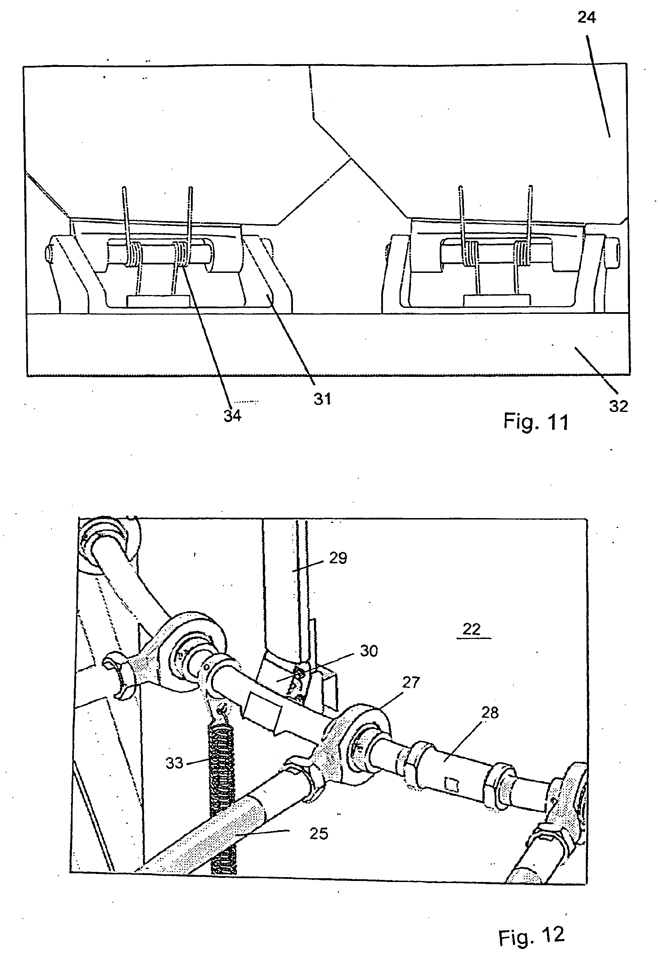

- Fig. 11 u. 12:: Detaildarstellungen der Anordnung gemäß den Figuren 6 bis 10.

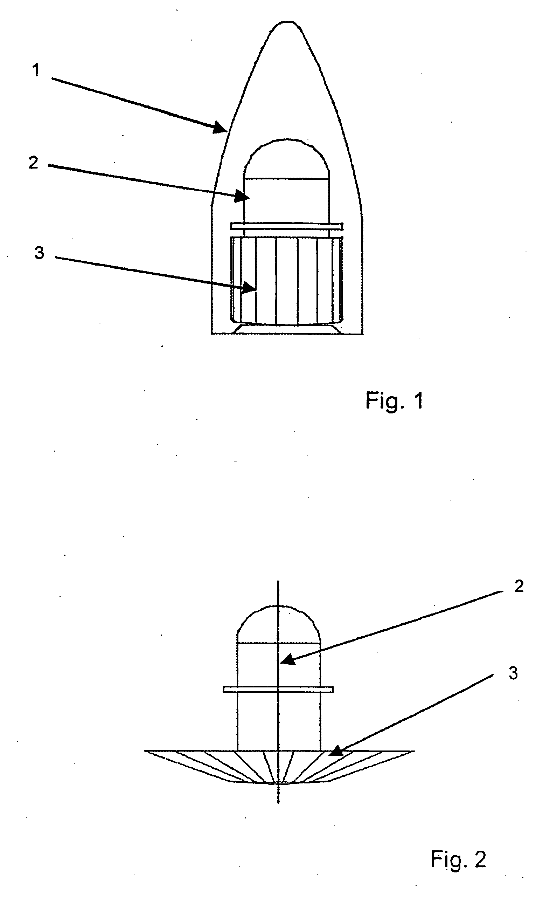

Die Darstellung gemäß Fig. 1 zeigt eine Rakete 1 mit einer Nutzlast 2, die als Wiedereintritt-Fahrzeug ausgebildet und die an demjenigen Teil, der beim Eintritt in die Atmosphäre in Flugrichtung vorn liegt, mit einem Hitzeschild 3 ausgestattet ist, der in gefaltetem Zustand im Inneren der Rakete 1 liegt. Fig. 2 zeigt die gleiche Nutzlast 2 außerhalb der Rakete 1 mit inzwischen entfaltetem Hitzeschild 3 in einer Konfiguration, in der es für den Eintritt entweder in die Erdatmosphäre oder in die Atmosphäre eines anderen Himmelskörpers vorbereitet ist. Der Hitzeschild besteht aus einer Vielzahl einzelner Paneele, die, wie nachfolgend noch näher erläutert wird, entfaltbar an der Struktur des Wiedereintritt-Fahrzeuges 2 angeordnet sind

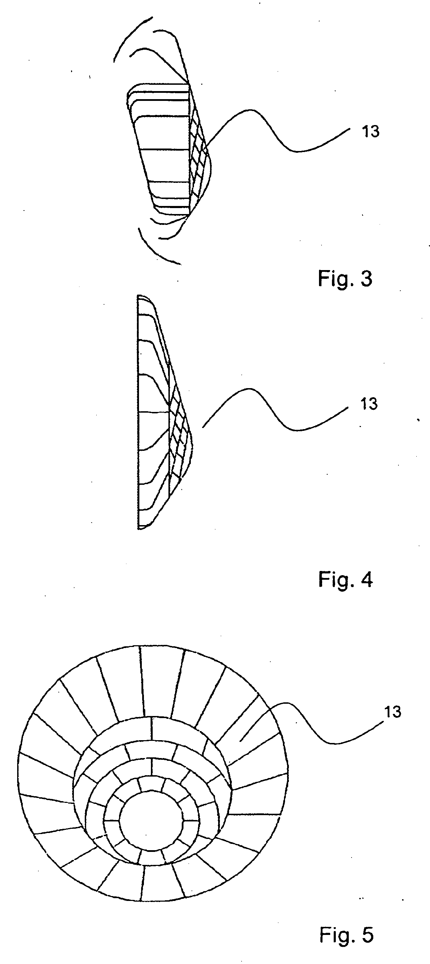

Die Darstellung gemäß den Figuren 3 bis 5 zeigt in gefaltetem, halb geöffnetem und in vollständig geöffnetem Zustand den Entfaltungsvorgang eines anderen Hitzeschildes 13, bei dem die den Hitzeschild 13 bildenden Paneele nicht rotationssymmetrisch zueinander ausgebildet sind. Dieser Hitzeschild 13, der ebenfalls an der Vorderseite eines Wiedereintritt-Fahrzeuges angebracht ist, dient zugleich auch als Bremsschirm und ist besonders vorteilhaft für Raumflugkörper, die unter einem relativ flachen Winkel in die Atmosphäre eintreten, wobei er gleichzeitig unterstützend zur Beeinflussung der Flugbahn des Raumflugkörpers in der Eintrittsphase eingesetzt werden kann.

Fig. 6 zeigt eine räumliche Darstellung eines weiteren Wiedereintritt-Fahrzeuges 22 mit einer Faltstruktur 23, die im Fall des hier beschriebenen Ausführungsbeispiels an demjenigen Teil des Raumfahrzeuges angeordnet ist, der beim Eintritt in die Atmosphäre in Flugrichtung hinten liegt, und die damit zugleich als Bremsschirm und als Stabilisator dient. Diese Faltstruktur 23 ist in Fig. 6 in gefaltetem Zustand mit ineinander gedrehten Faltpaneelen 24 dargestellt, während Fig. 7 den von der Faltstruktur 23 umschlossenen Teil des Wiedereintritt-Fahrzeuges 22, umgeben von der teilweise geöffneten Faltstruktur 23, zeigt. In dieser Figur zu erkennen und in den nachfolgenden Figuren noch detaillierter dargestellt ist der Mechanismus, der ein sicheres Entfalten der Faltstruktur 23 gewährleistet.

Die Faltstruktur 23 wird von einer Anzahl einzelner Paneele 24 gebildet, die jeweils aus hochtemperatur-beständiger faserverstärkter Keramik bestehen und die, wenn sie entfaltet sind, einen stabilen Schild bilden, der widerstandsfähig gegen die hohen Verzögerungslasten ist, die beim Eintritt in die Atmosphäre auftreten. Die einzelnen Paneele 24 werden durch Druckstreben 25, die im Fall des hier beschriebenen Ausführungsbeispiels aus Metallrohren bestehen und die an ihren beiden Enden mit Gelenklagern 26, 27 ausgestattet sind, abgestützt. Jeweils eines dieser Gelenklager 26 verbindet jede Druckstrebe 25 mit dem zugeordneten Paneel 24, während das an dem dem Paneel 24 gegenüberliegenden Ende der Druckstrebe 25 angeordnete Gelenklager 27 auf einem zentralen, das Wiedereintritt-Fahrzeug 22 umgebenden Entfaltungsrohr 28 gehaltert ist.

Das Entfaltungsrohr 28 vermag an der äußeren Struktur des Wiedereintritt-Fahrzeuges 22 entlang auf Gleitstäben 29 reibungsarm zu gleiten und wird nach Abschluß der Entfaltungsvorganges durch eine Verriegelungsfeder 30 in seiner Endposition fixiert. An ihrem mit der Struktur des wiedereintritt-Fahrzeuges 22 verbundenen Ende sind die Paneele 24, wie insbesondere in Fig. 11 dargestellt, jeweils über Schwenklager 31 an einem Ring 32 der Struktur des Wiedereintritt-Fahrzeuges 22 gehaltert.

Die Paneele 24 werden durch einen Entfaltungs- und Verriegelungsmechanismus aus ihrer an der Struktur des Wiedereintritt-Fahrzeuges 22 anliegenden Transportposition in die entfaltete Position bewegt und in dieser gehalten. Letzterer Mechanismus umfaßt pro Paneel 24 eine zugfeder 33, im Fall des hier beschriebenen Ausführungsbeispiels aus Stahl, die den Entfaltungsvorgang aktiviert und die das jeweils zugeordnete Paneel 24 im entfalteten Zustand fixiert. Die Gesamtheit der Zugfedern 33 bildet dabei einen gemeinsamen Antrieb für alle Paneele 24 sowohl für den Entfalt- als auch für den Verriegelungs-Vorgang. Stahl-Schenkelfedern 34, die an den Schwenklagern 31 angeordnet sind, initiieren dabei das Aufklappen jeden einzelnen Paneels 24.

Die Abstimmung der Aufhängung der Paneele 24 zum jeweiligen Nachbar-Paneel ist dabei so ausgebildet, daß sich die Paneele 24 bei ihrem Entfaltungsvorgang nicht gegenseitig behindern oder aneinander reiben. Aus diesem Grund sind die Schwenklager 31 benachbarter Paneele 24 gegeneinander leicht verschränkt oder verdreht auf dem Ring 32 angebracht. Ein Überlappen der Paneele 24 im entfalteten Zustand an ihren Längsseiten Seiten verhindert dabei ein Durchströmen heißer Wiedereintrittsgase, so daß ein Aufheizen der dahinterliegenden Bauteile zuverlässig vermieden wird.

Es versteht sich, daß der vorangehend für den Fall einer Anordnung, die an demjenigen Teil des Raumfahrzeuges angeordnet ist, der beim Eintritt in die Atmosphäre in Flugrichtung hinten liegt, und die damit zugleich als Bremsschirm und als Stabilisator dient, beschriebene Entfaltungs- und Verriegelungsmechanismus in gleicher Weise auch bei den in den Figuren 1 bis 5 gezeigten Anordnungen, die an demjenigen Teil des Raumfahrzeuges angebracht sind, der beim Eintritt in die Atmosphäre in Flugrichtung vorn liegt, einsetzbar ist. In diesen Fällen öffnet der Entfaltungs- und Verriegelungsmechanismus die Paneele 24 entgegen der Flugrichtung.

Während die Paneele 24, die vergleichsweise dünnwandig ausgebildet und mit Versteifungselementen verstärkt sind, aus einer hochtemperatur-beständigen faserverstärkten Keramik bestehen, bestehen die wesentlichen anderen strukturtragenden Elemente der hier beschriebenen Vorrichtung entweder ebenfalls aus einer solchen Keramik oder aber aus einem zugleich hochfesten und hochtemperatur-beständigen Metall, beispielsweise dem Werkstoff PM 100. Dies sind insbesondere die Druckstreben 25 einschließlich der Gelenklager 26 und 27, das Entfaltungsrohr 28 sowie die Schwenklager 31 der Paneele 24.

## Patentansprüche

1. Raumfahrzeug mit einer Vorrichtung zum Hitzeschutz und zum Abbremsen des Raumfahrzeuges, die beim Eintritt in die Atmosphäre entfaltbar ist, mit einem entfaltbaren Schild (3, 13, 23) aus hochtemperatur-beständigen Paneelen (24), die entfaltbar an der Außenstruktur des Raumfahrzeuges (2, 22) gehaltert sind, **dadurch gekennzeichnet, dass** die Paneele aus einer hochtemperatur-beständigen faserverstärkten Keramik bestehen, und dass die Paneele (24) durch Druckstreben (25) abgestützt sind, die an ihren beiden Enden mit Gelenklagern (26, 27) ausgestattet sind und ein Gelenklager (26) die Druckstrebe (25) mit dem zugeordneten Paneel (24) verbindet, während das an dem dem Paneel (24) gegenüberliegenden Ende der Druckstrebe (25) angeordnete Gelenklager (27) auf einem zentralen, das Wiedereintritt-Fahrzeug (22) umgebenden und entlang diesem gleitend verschieblichen Entfaltungsrohr (28) gehaltert ist.

2. Raumfahrzeug mit Vorrichtung gemäß Anspruch 1, **dadurch gekennzeichnet, daß** die strukturtragenden Elemente, insbesondere die Druckstreben (25), die Gelenklager (26, 27), das Entfaltungsrohr (28) sowie die Schwenklager (31) der Paneele (24) aus einem zugleich hochfesten und hochtemperatur-beständigen Metall oder aus Faserkeramik bestehen.

3. Raumfahrzeug mit Vorrichtung gemäß Anspruch 1 oder 2, **dadurch gekennzeichnet, daß** die strukturtragenden Elemente, insbesondere die Paneel angeschraubten Scharnierlasche (24), aus dem Werkstoff PM1000 oder aus Faserkeramik bestehen.

4. Raumfahrzeug mit Vorrichtung gemäß einem der Ansprüche 1 bis 3, **dadurch gekennzeichnet, daß** die Paneele (24) durch einen Entfaltungs- und Verriegelungsmechanismus (33, 34) aus ihrer an der Struktur des Wiedereintritt-Fahrzeuges (22) anliegenden Transportposition in die entfaltete Position bewegbar und in dieser fixierbar sind.

5. Raumfahrzeug mit Vorrichtung gemäß Anspruch 4, **dadurch gekennzeichnet, daß** der Mechanismus pro Paneel (24) eine Zugfeder (33) sowie eine Schenkelfeder (34) umfaßt, wobei die letztere an einem Schwenklager (31) für das Paneel (24) angeordnet ist.

6. Raumfahrzeug mit Vorrichtung gemäß einem der Ansprüche 1 bis 5, **dadurch gekennzeichnet, daß** der entfaltbare Schild (3, 13) an demjenigen Teil des Raumfahrzeuges (2) angeordnet ist, der beim Eintritt in die Atmosphäre in Flugrichtung vorn liegt.

7. Raumfahrzeug mit Vorrichtung gemäß einem der Ansprüche 1 bis 6, **dadurch gekennzeichnet, daß** der entfaltbare Schild (23) an demjenigen Teil des Raumfahrzeuges (22) angeordnet ist, der beim Eintritt in die Atmosphäre in Flugrichtung hinten liegt.

8. Raumfahrzeug mit Vorrichtung gemäß einem der Ansprüche 1 bis 7, **dadurch gekennzeichnet, daß** der entfaltbare Schild (13) asymmetrisch ausgebildet ist.

## Claims

1. Space vehicle having, for heat protection and for braking the space vehicle, a device which can be deployed when entering the atmosphere, having a deployable shield (3, 13, 23) comprising high-temperature-resistant panels (24) which are retained so as to be able to be deployed on the outer structure of the space vehicle (2, 22), **characterised in that** the panels comprise a high-temperature-resistant fibre-reinforced ceramic material, and **in that** the panels (24) are supported by means of struts (25) which are provided at both ends thereof with articulated bearings (26, 27) and an articulated bearing (26) connects the strut (25) to the associated panel (24), whilst the articulated bearing (27) arranged at the end of the strut (25) opposite the panel (24) is retained on a central deployment pipe (28) which surrounds the re-entry vehicle (22) and which can be displaced in a sliding manner therealong.

2. Space vehicle having a device according to claim 1, **characterised in that** the structure-carrying elements, in particular the struts (25), the articulated bearings (26, 27), the deployment pipe (28) and the pivot bearings (31) of the panels (24) comprise a metal or ceramic fibre which is both high-strength and high-temperature-resistant.

3. Space vehicle having a device according to claim 1 or claim 2, **characterised in that** the structure-carrying elements, in particular the hinged flap (24) which is screwed to a panel comprise the material PM1000 or ceramic fibre.

4. Space vehicle having a device according to any one of claims 1 to 3, **characterised in that** the panels (24) can be moved, by means of a deployment and locking mechanism (33, 34), from the transport position thereof in abutment against the structure of the re-entry vehicle (22) into the deployed position and fixed **in that** position.

5. Space vehicle having a device according to claim 4, **characterised in that** the mechanism comprises a tension spring (33) and a helical spring (34) for each panel (24), the helical spring being arranged on a pivot bearing (31) for the panel (24).

6. Space vehicle having a device according to any one of claims 1 to 5, **characterised in that** the deployable shield (3, 13) is arranged on that portion of the space vehicle (2) which is at the front in the flight direction when entering the atmosphere.

7. Space vehicle having a device according to any one of claims 1 to 6, **characterised in that** the deployable shield (23) is arranged on that portion of the space vehicle (22) which is at the rear in the flight direction when entering the atmosphere.

8. Space vehicle having a device according to any one of claims 1 to 7, **characterised in that** the deployable shield (13) is constructed in an asymmetric manner.

## Revendications

1. Véhicule spatial avec un dispositif de protection contre la chaleur et pour le freinage du véhicule spatial, qui peut être déployé lors de l'entrée dans l'atmosphère, avec un bouclier déployable (3, 13, 23) en panneaux (24) résistants aux températures élevées, qui sont maintenus, déployables, à la structure extérieure du véhicule spatial (2, 22), **caractérisé en ce que** les panneaux consistent en céramique renforcée par des fibres, et **en ce que** les panneaux (24) sont étayés par des entretoises (25), qui, à leurs deux extrémités, sont équipés d'articulations à rotule (26, 27), et qu'une articulation à rotule (26) relie l'entretoise (25) au panneau (24) associé, tandis que l'articulation à rotule (27), qui est disposée à l'extrémité de l'entretoise (25), située vis-à-vis du panneau (24), est maintenue sur un tube de déploiement (28) central, qui entoure le véhicule de rentrée dans l'atmosphère (22) et peut être déplacé en coulissant le long de celui-ci.

2. Véhicule spatial avec dispositif selon la revendication 1, **caractérisé en ce que** les éléments, qui portent la structure, en particulier les entretoises (25), les articulations à rotule (26, 27), le tube de déploiement (28), ainsi que les articulations de pivotement (31) des panneaux (24) sont constitués par un métal, qui est à la fois extrêmement solide et résistant aux températures élevées, ou en céramique renforcée par des fibres.

3. Véhicule spatial avec dispositif selon revendication 1 ou 2, **caractérisé en ce que** les éléments, qui portent la structure, en particulier la patte à charnière (24), vissée au panneau, sont faits en matériau PM1000 ou en céramique renforcée par des fibres.

4. Véhicule spatial avec dispositif selon l'une des revendications 1 à 3, **caractérisé en ce que** les panneaux (24) peuvent être déplacés de leur position de transport, dans laquelle ils portent contre la structure du véhicule de rentrée dans l'atmosphère (22), à la position de déploiement, et peuvent être fixés dans celle-ci, au moyen d'un mécanisme de déploiement et de verrouillage (33, 34).

5. Véhicule spatial avec dispositif selon la revendication 4, **caractérisé en ce que** le mécanisme comprend, pour chaque panneau (24), un ressort de traction (33), ainsi qu'un ressort à branches (34), ce dernier étant agencé, pour le panneau (24), à une articulation de pivotement (31).

6. Véhicule spatial avec dispositif selon l'une des revendications 1 à 5, **caractérisé en ce que** le bouclier déployable (3, 13) est agencé à la partie du véhicule spatial (2), qui, lors de l'entrée dans l'atmosphère, est située en avant, dans la direction de vol.

7. Véhicule spatial avec dispositif selon l'une des revendications 1 à 6, **caractérisé en ce que** le bouclier déployable (23) est agencé à la partie du véhicule spatial (22), qui, lors de l'entrée dans l'atmosphère, est située en arrière, dans la direction de vol

8. Véhicule spatial avec dispositif selon l'une des revendications 1 à 7, **caractérisé en ce que** la bouclier déployable (13) est de conception asymétrique.
